# EUROPÄISCHE PATENTSCHRIFT

(11) **EP 3 452 836 B1**
(45) Veröffentlichungstag und Bekanntmachung des Hinweises auf die Patenterteilung: **13.05.2020**
(21) Anmeldenummer: 17749399.6
(22) Anmeldetag: 21.07.2017
(51) Int. Cl.: G01N 35/10, B01L 3/02, G01F 23/26, G01D 5/241

(54) **PIPETTIERVORRICHTUNG, FLÜSSIGKEITSBEARBEITUNGSSYSTEM UND VERFAHREN ZUM BETREIBEN EINES FLÜSSIGKEITSBEARBEITUNGSSYSTEMS**
PIPETTING DEVICE, FLUID PROCESSING SYSTEM AND METHOD FOR OPERATING A FLUID PROCESSING SYSTEM
DISPOSITIF DE PIPETTAGE, SYSTÈME DE TRAITEMENT DE LIQUIDE ET PROCÉDÉ DE FONCTIONNEMENT D'UN SYSTÈME DE TRAITEMENT DE LIQUIDE

(30) Priorität: 22.07.2016 CH 9502016; 10.02.2017 CH 1592017; 19.04.2017 CH 5232017
(43) Veröffentlichungstag der Anmeldung: 13.03.2019
(73) Patentinhaber: Tecan Trading AG, 8708 Männedorf (CH)
(72) Erfinder: OTT, Philipp, 8496 Steg im Tösstal (CH)
(74) Vertreter: OK pat AG
(86) Internationale Anmeldenummer: PCT/EP2017/068495
(87) Internationale Veröffentlichungsnummer: WO 2018/015544

(56) Entgegenhaltungen:
- EP-A1- 2 840 366
- US-A1- 2003 049 861
- US-A1- 2005 279 855
- US-A1- 2009 093 065

## Beschreibung

### TECHNISCHES GEBIET DER ERFINDUNG

Die vorliegende Erfindung bezieht sich auf das technische Gebiet der Flüssigkeitsbearbeitungssysteme und betrifft insbesondere eine Pipettiervorrichtung zum Ansaugen (bzw. Aufnehmen / Aspirieren) und Abgeben (bzw. Zuführen / Dispensieren) von Flüssigkeitsvolumina, wie beispielsweise Flüssigkeitsproben, für automatisierte Laborgeräte bzw. Laboranlagen. Des Weiteren wird ein Flüssigkeitsbearbeitungssystem umfassend eine Pipettiervorrichtung und eine Messeinheit vorgeschlagen. Ferner werden Verfahren zum Betreiben eines Flüssigkeitsbearbeitungssystems in einem offenen und geschlossenen Regelkreis vorgeschlagen.

### HINTERGRUND DER ERFINDUNG

Wenn in medizinischen, chemischen, analytischen oder pharmazeutischen Labors grosse Mengen an Proben zu untersuchen sind, werden dazu heute meist automatisierte Laborsysteme bzw. -anlagen eingesetzt, welche eine rasche und zuverlässige Verarbeitung jeder einzelnen Probe ermöglichen. Solche Laborsysteme sind oftmals als Flüssigkeitsbearbeitungssysteme auf die Handhabung von Flüssigkeitsvolumina ausgelegt, und dazu geeignet mit diesen Proben bestimmte Vorgänge auszuführen, wie beispielsweise optische Messungen, Pipettierungen, Waschen, Zentrifugieren, Inkubieren und Filtrieren. Solche Flüssigkeitsbearbeitungssysteme umfassen insbesondere Pipettierer sowohl zum Ansaugen und Abgeben von Flüssigkeiten oder Dispenser ausschliesslich zum Abgeben von Flüssigkeiten. Die meisten Laboranwendungen erfordern sehr präzise Pipettieroperationen um eine zufriedenstellende analytische Genauigkeit zu erhalten. Folglich ist eine genaue Kenntnis der verarbeiteten Probenmengen bzw. Flüssigkeitsvolumina von entscheidender Bedeutung.

In der Schweizer Patentanmeldung CH 00950/16 mit Anmeldetag 22. Juli 2016 werden ein Verfahren, welches eine genaue Bestimmung eines bearbeiteten (d.h. aspirierten bzw. dispensierten) Flüssigkeitsvolumens beim Pipettieren erlaubt, sowie eine Pipettiervorrichtung, welche dieses Verfahren für eine präzise Bestimmung der verarbeiteten Probenmengen bzw. Flüssigkeitsvolumina einsetzt, vorgeschlagen.

Bei bislang bekannten Systemen wird dies meist indirekt bestimmt, beispielsweise indem die Probe mit einer bekannten Ansaugleistung während einer bestimmten Zeit aufgenommen wird. Das Problem mit diesen indirekten Verfahren der Volumenbestimmung ist, dass nicht gewährleistet werden kann, dass tatsächlich die gewünschte Probenmenge aufgenommen (respektive abgegeben) wurde, da beispielsweise (zum Teil) Luft anstatt der Probenflüssigkeit angesaugt wird oder gar keine Flüssigkeit aufgenommen wird, weil die Pipettenspitze verstopft ist. Ebenso hängt das effektiv aufgenommene Volumen von der Viskosität und der Oberflächenspannung der Probe ab. Weitere Parameter wie z.B. Variationen im Durchmesser der Öffnung von Wegwerf-Pipettenspitzen beeinflussen ebenfalls das effektiv aufgenommene Probenvolumen.

Bekannte Verfahren der kapazitiven Flüssigkeitspegeldetektion (sog. "capacitive liquid level detection", cLLD) können dazu verwendet werden, um die Pegelhöhendifferenz zwischen dem Eintauchen in und dem Austauchen aus einer Probenflüssigkeit zu bestimmen. Aus der Pegelhöhendifferenz und der Querschnittsfläche des Gefässes kann das aufgenommene oder abgegebene Volumen berechnet werden. Diese Verfahren sind allerdings für kleine Volumina und grosse Querschnittsflächen zu ungenau. Sie eignen sich daher nur für grosse Volumina. Zusätzlich verfälschen mechanische Toleranzen der Höhenzustellung der kapazitiven Messfühler die Messung der Pegelhöhendifferenz. Parasitäre Kapazitäten können Ursache einer ungenauen Bestimmung der verarbeiteten Probenmengen bzw. Flüssigkeitsvolumina sein.

Die Dokumente US2003/049861 und US2009/093065 offenbaren eine Pipettiervorrichtung mit einer Röhre, wobei ein Fluidraum der Röhre mit einem Arbeitsfluid gefüllt ist, das an einem ersten Ende der Röhre mit einem Druckerzeugungsmittel wirkverbindbar ist, und wobei das Arbeitsfluid und die Probenflüssigkeit voneinander über einen Luftspalt elektrisch isoliert sind. Das Dokument US2005/279855 offenbart eine Pipettiervorrichtung mit einem Messkondensator zur Bestimmung des Flüssigkeitsniveaus in der Pipettenspitze. Das Dokument EP2840366 offenbart einen Messkondensator zur Bestimmung eines Flüssigkeitsniveaus, wobei eine Elektrode durch eine Probenflüssigkeit gebildet wird.

Es besteht Bedarf nach Mitteln, welche u.a. eine einfache sowie präzise Bestimmung der verarbeiteten Probenmengen bzw. Flüssigkeitsvolumina in automatisierten Pipettiervorrichtungen erlauben und somit eine hohe analytische Genauigkeit der durchgeführten Untersuchungen bzw. Operationen gewährleisten.

### ZUSAMMENFASSUNG DER ERFINDUNG

Es ist eine Aufgabe der vorliegenden Erfindung eine Pipettiervorrichtung bereitzustellen, mit deren Hilfe eine einfache und präzise Bestimmung der verarbeiteten Probenmengen bzw. Flüssigkeitsvolumina ermöglicht wird, wobei Störeinflüsse bei der Bestimmung im Wesentlichen eliminiert werden. Diese Aufgabe wird erfindungsgemäss durch die in Anspruch 1 festgelegte Pipettiervorrichtung erfüllt.

Es ist zudem eine Aufgabe der vorliegenden Erfindung ein Flüssigkeitsbearbeitungssystem mit der vorgeschlagenen Pipettiervorrichtung auszustatten, um eine für Laborsysteme bzw. -anlagen geeignete Einrichtung bereitzustellen. Diese Aufgabe wird erfindungsgemäss durch das Flüssigkeitsbearbeitungssystem gemäss Anspruch 12 gelöst.

Spezifische erfindungsgemässe Ausführungsvarianten werden in den abhängigen Ansprüchen angegeben.

Eine erfindungsgemässe Pipettiervorrichtung umfasst eine Röhre, wobei ein Fluidraum der Röhre zumindest teilweise mit einem Arbeitsfluid gefüllt ist, das an einem ersten Ende der Röhre mit einem Druckerzeugungsmittel wirkverbindbar ist, ausgebildet zum Ansaugen bzw. Abgeben einer Probenflüssigkeit über eine an einem zweiten Ende der Röhre vorgesehene Öffnung, wobei das Arbeitsfluid und die Probenflüssigkeit voneinander über einen Luftspalt elektrisch isoliert sind, wobei an der Pipettiervorrichtung eine erste Elektrode ausgebildet ist, welche zusammen mit einer zweiten Elektrode, die durch mindestens einen Teil der in der Röhre aufnehmbaren Probenflüssigkeit gebildet ist, einen Messkondensator bildet, welcher mit einer Messeinheit wirkverbindbar ist, welche ausgebildet ist, in Abhängigkeit der Kapazität des Messkondensators ein Volumen der angesaugten bzw. abgegebenen Probenflüssigkeit zu bestimmen, ferner umfassend einen ersten elektrischen Kontakt, welcher von der ersten Elektrode und zweiten Elektrode elektrisch isoliert ist und dazu ausgebildet ist, eine elektrische Verbindung mit dem Arbeitsfluid herzustellen, wobei der erste elektrische Kontakt über eine niederohmige Wandlerschaltung elektrisch mit der Messeinheit verbindbar ist.

Die vorliegende Erfindung erlaubt es die Probenflüssigkeit als eine der beiden Elektroden eines Messkondensators zu verwenden. Mit anderen Worten, wirkt die Probenflüssigkeit als "Flüssigelektrode". Je nach Menge der von der Pipettiervorrichtung angesaugten respektive abgegebenen Probenflüssigkeit ändert sich die Kapazität dieses Messkondensators (d.h. sie wird grösser respektive kleiner), wodurch mittels der Messeinheit direkt das Volumen der angesaugten respektive abgegebenen Probenflüssigkeit genau bestimmt werden kann. Die Probenflüssigkeit sollte über eine gewisse Leitfähigkeit verfügen. Dabei wirkt die Röhre selber als Dielektrikum zwischen den beiden Elektroden. Durch eine entsprechende Ausgestaltung der Röhre, in deren Innerem sich die Probenflüssigkeit als zweite Elektrode befindet, und z.B. an deren äusseren Oberfläche die erste Elektrode aufgebracht ist, können auch sehr kleine Volumen mit einer hohen Genauigkeit bestimmt werden. Die beiden Elektroden des Messkondensators können dabei eine beliebige Form haben. Es muss lediglich vorweg ein Zusammenhang zwischen der Kapazität des Messkondensators in Abhängigkeit des Probenvolumens ermittelt werden.

Weitere Angaben sind in der Schweizer Patentanmeldung CH 00950/16 mit Anmeldetag 22. Juli 2016 gemacht.

Ein metallischer erster elektrischer Kontakt an der Unterseite der Röhre steht mit der Probenflüssigkeit elektrisch in Verbindung. Ein zweiter elektrischer Kontakt an der Oberseite der Röhre steht mit dem Arbeitsfluid elektrisch in Verbindung und kann das Arbeitsfluid an ein Guard-Potential anlegen. Der Luftspalt zwischen den beiden Säulen der Probenflüssigkeit und des Arbeitsfluids wirkt als elektrischer Isolator. Die Erfindung ermöglicht, dass lediglich die Säule der Probenflüssigkeit als für den Messkondensator relevante Elektrode wirken kann.

Es ist zu erwähnen, dass unter dem Begriff Probenvolumen nicht nur das Volumen von flüssigen Analyseproben verstanden wird, sondern ebenfalls Volumina von Reagenzien, Verdünnungslösungen wie Pufferlösungen, Lösungsmittel oder auch von Suspensionen mit Partikeln oder Zellen.

In einer Ausführungsvariante der Pipettiervorrichtung ist die niederohmige Wandlerschaltung ausgebildet zum Reduzieren von parasitären Kapazitäten, welche durch das Arbeitsfluid hervorrufbar sind.

In einer weiteren Ausführungsvariante der Pipettiervorrichtung ist die niederohmige Wandlerschaltung mit einem hochohmigen Eingang und einem niederohmigen Ausgang versehen.

In einer weiteren Ausführungsvariante umfasst die Pipettiervorrichtung ferner einen zweiten elektrischen Kontakt, welcher von der ersten Elektrode elektrisch isoliert ist und dazu ausgebildet ist, beim Ansaugen oder Abgeben der Probenflüssigkeit eine elektrische Verbindung mit der Probenflüssigkeit herzustellen, sodass mindestens ein Teil der Probenflüssigkeit, welche sich in der Röhre befindet, die zweite Elektrode des Messkondensators bildet, wobei die erste Elektrode mit der Messeinheit elektrisch verbindbar ist.

In einer weiteren Ausführungsvariante der Pipettiervorrichtung ist die Röhre durch die erste Elektrode teilweise oder vollständig umhüllt.

In einer weiteren Ausführungsvariante der Pipettiervorrichtung besteht die Röhre wenigstens im Bereich der Öffnung aus einem elektrisch leitenden Material und bildet den zweiten elektrischen Kontakt, oder besteht die Röhre alternativ aus einem elektrisch nichtleitenden Material, welches als Dielektrikum des Messkondensators vorgesehen ist.

In einer weiteren Ausführungsvariante der Pipettiervorrichtung ist der zweite elektrische Kontakt über eine kapazitive Koppelung via die Probenflüssigkeit erstellbar, welche sich in einem Probenbehälter befindet, aus dem Probenflüssigkeit ansaugbar bzw. in den Probenflüssigkeit abgebbar ist.

In einer weiteren Ausführungsvariante der Pipettiervorrichtung ist der zweite elektrische Kontakt über ein drittes Umschaltelement mit der Messeinheit, der niederohmigen Wandlerschaltung oder Masse verbindbar.

In einer weiteren Ausführungsvariante der Pipettiervorrichtung sind der erste elektrische Kontakt und die erste Elektrode über jeweils ein erstes Umschaltelement und zweites Umschaltelement mit der Messeinheit, der niederohmigen Wandlerschaltung oder Masse verbindbar, wobei durch ein Umschalten der jeweiligen Kopplungen zwischen dem ersten elektrischen Kontakt, der ersten Elektrode und dem zweiten elektrischen Kontakt mit jeweils der Messeinheit, der niederohmigen Wandlerschaltung oder Masse physikalische Effekte, welche sich negativ auf die Messergebnisse auswirken können, im Wesentlichen eliminiert werden.

In einer weiteren Ausführungsvariante der Pipettiervorrichtung ist der zweite elektrische Kontakt in einem Zustand gegenüber Masse isoliert und mit der Messeinheit verbunden, in welchem der zweite elektrische Kontakt und die Probenflüssigkeit voneinander beabstandet sind bzw. der zweite elektrische Kontakt nicht in die Probenflüssigkeit eingetaucht ist.

In einer weiteren Ausführungsvariante der Pipettiervorrichtung ist der zweite elektrische Kontakt in einem Zustand mit Masse verbunden und von der Messeinheit getrennt, in welchem der zweite elektrische Kontakt und die Probenflüssigkeit miteinander in Verbindung stehen bzw. der zweite elektrische Kontakt in die Probenflüssigkeit eingetaucht ist.

Gemäss einem weiteren Aspekt der vorliegenden Erfindung umfasst ein Flüssigkeitsbearbeitungssystem eine vorgeschlagene Pipettiervorrichtung mit einer Messeinheit, welche ausgebildet ist, in Abhängigkeit der Kapazität des Messkondensators ein Volumen der angesaugten bzw. abgegebenen Probenflüssigkeit zu bestimmen, und eine niederohmige Wandlerschaltung, wobei der erste elektrische Kontakt, welcher dazu ausgebildet ist, eine elektrische Verbindung mit dem Arbeitsfluid herzustellen, und die Messeinheit über die niederohmige Wandlerschaltung elektrisch miteinander verbunden sind.

In einer Ausführungsvariante umfasst das Flüssigkeitsbearbeitungssystem ferner ein Druckerzeugungsmittel, wobei das Druckerzeugungsmittel mit einem Regler verbunden ist, welcher ausgebildet ist, um in einem geschlossenen Regelkreis basierend auf dem von der Messeinheit bestimmten Volumen der angesaugten bzw. abgegebenen Probenflüssigkeit sowie eines vorgegebenen Zielvolumens der angesaugten bzw. abgegebenen Probenflüssigkeit, einen Druck für das Ansaugen bzw. Abgegeben der Probenflüssigkeit an das Arbeitsfluid anzulegen.

In einer weiteren Ausführungsvariante umfasst das Flüssigkeitsbearbeitungssystem ferner eine motorisierte Transporteinheit, wie beispielsweise einen Roboterarm, auf welcher die Pipettiervorrichtung angeordnet ist, wobei der Regler zusätzlich dazu ausgebildet ist, Signale an die Transporteinheit zu senden, um die Pipettiervorrichtung so zu bewegen, dass die Öffnung der Röhre genau positionierbar ist, insbesondere in einem mit der Probenflüssigkeit gefüllten Probenbehälter, wie beispielsweise einem Probenröhrchen oder einer Mikroplatte.

In einer weiteren Ausführungsvariante umfasst das Flüssigkeitsbearbeitungssystem ferner ein drittes Umschaltelement, welches den zweiten elektrischen Kontakt elektrisch mit der Messeinheit verbindet oder hiervon trennt.

In einer weiteren Ausführungsvariante des Flüssigkeitsbearbeitungssystems ist das dritte Umschaltelement dazu eingerichtet, den zweiten elektrischen Kontakt elektrisch mit Masse zu verbinden oder hiergegen zu isolieren.

In einer weiteren Ausführungsvariante des Flüssigkeitsbearbeitungssystems isoliert das dritte Umschaltelement den zweiten elektrischen Kontakt in einem Zustand gegenüber Masse, in welchem der zweite elektrische Kontakt und die Probenflüssigkeit voneinander beabstandet sind bzw. der zweite elektrische Kontakt nicht in die Probenflüssigkeit eingetaucht ist.

In einer weiteren Ausführungsvariante des Flüssigkeitsbearbeitungssystems verbindet das dritte Umschaltelement den zweiten elektrischen Kontakt in einem Zustand mit Masse, in welchem der zweite elektrische Kontakt und die Probenflüssigkeit miteinander in Verbindung stehen bzw. der zweite elektrische Kontakt in die Probenflüssigkeit eingetaucht ist.

Gemäss einem weiteren Aspekt der vorliegenden Erfindung umfasst ein Verfahren zum Betreiben eines vorgeschlagenen Flüssigkeitsbearbeitungssystems in einem offenen Regelkreis die Schritte:
- Erfassen eines Zustandes, in welchem der zweite elektrische Kontakt (9") der Pipettiervorrichtung mit der Probenflüssigkeit in Kontakt (4) tritt;
- Umschalten des Flüssigkeitsbearbeitungssystems auf Volumenmessung;
- Aspirieren der Probenflüssigkeit (4) durch das Druckerzeugungsmittel; und
- Bestimmen eines Volumens der aspirierten Probenflüssigkeit (4') in Abhängigkeit der Kapazität des Messkondensators.

Gemäss einem weiteren Aspekt der vorliegenden Erfindung umfasst ein Verfahren zum Betreiben eines vorgeschlagenen Flüssigkeitsbearbeitungssystems in einem geschlossenen Regelkreis die Schritte:
- Erfassen eines Zustandes, in welchem der zweite elektrische Kontakt (9") der Pipettiervorrichtung mit der Probenflüssigkeit in Kontakt (4) tritt;
- Umschalten des Flüssigkeitsbearbeitungssystems auf Volumenmessung; und
- Aspirieren der Probenflüssigkeit (4) durch das Druckerzeugungsmittel basierend auf ein vorbestimmtes Volumensignal.

Es wird ausdrücklich darauf hingewiesen, dass die vorstehenden Ausführungsvarianten beliebig kombinierbar sind. Lediglich diejenigen Kombinationen von Ausführungsvarianten sind ausgeschlossen, die durch die Kombination zu Widersprüchen führen würden.

### KURZE BESCHREIBUNG DER ZEICHNUNGEN

Nichtlimitierende Ausführungsbeispiele der vorliegenden Erfindung werden nachstehend anhand von Figuren noch näher erläutert. Es zeigen:
- Fig. 1: eine vergrösserte schematische Darstellung eines Ausführungsbeispiels einer Pipettenspitze von einer erfindungsgemässen Pipettiervorrichtung;
- Fig. 2: eine schematische Darstellung eines Ausführungsbeispiels einer erfindungsgemässen Pipettiervorrichtung, welche mit einem Arbeitsfluid betrieben wird;
- Fig. 3a): ein schematisches Schaubild einer elektrischen Verschaltung von einer Pipettiervorrichtung in einem Zustand, bei welchem die Pipettiervorrichtung nicht in die Probenflüssigkeit eingetaucht ist,
- b): das schematische Schaubild der elektrisch verschalteten Pipettiervorrichtung nach Fig. 3a) in einem Zustand, bei welchem die Pipettiervorrichtung in die Probenflüssigkeit eingetaucht ist; und
- Fig. 4): einen beispielhaften Probenbehälterträger von einem Flüssigkeitsbearbeitungssystem.

In den Figuren stehen gleiche Referenzzeichen für gleiche Elemente.

### DETAILLIERTE BESCHREIBUNG DER ERFINDUNG

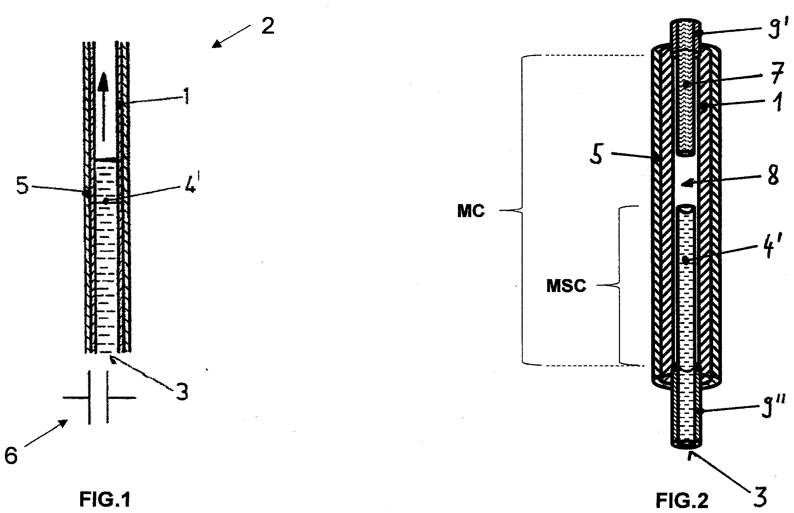

Fig. 1 zeigt stark vereinfacht in einer schematischen Darstellung ein Ausführungsbeispiel einer Röhre 1 von einer Pipettenspitze 2 einer Pipettiervorrichtung. Die Röhre 1 besteht beispielsweise aus Glas oder einem Kunststoff und ist Teil der Pipettenspitze 2. Obwohl die Röhre 1 als Zylinder mit kreisförmigem Querschnitt gezeigt ist, kann sie ein jeglicher langgestreckter Hohlkörper sein und im Querschnitt eine jegliche Form annehmen, z.B. oval, rechteckig, usw. In den Kanal dieser Röhre 1 wird durch eine Öffnung 3 am einen Ende der Röhre 1 eine Probenflüssigkeit 4' aus einem Probenbehälter (nicht gezeigt) in die Röhre 1 angesaugt bzw. aus dieser abgegeben, indem z.B. mittels einer Pumpe, einem Kolben oder Stössel (nicht gezeigt), welche(r) mit dem anderen Ende der Röhre 1 in Fluidverbindung steht, der Druck in der Röhre 1 reduziert bzw. erhöht wird. Um die Röhre 1 herum ist eine erste Elektrode 5 ganz oder teilweise flächig umhüllend angeordnet. Diese erste Elektrode 5 kann beispielsweise aus einer auf die Röhre 1 aufgedampften leitenden Beschichtung, z.B. eine Kupferschicht, oder einer auf die Röhre 1 aufgeklebten leitenden Folie, z.B. eine Kupferfolie, bestehen. Diese erste Elektrode 5 kann auf ein bestimmtes Referenzpotential angelegt werden, z.B. Masse. Wird nun die Probenflüssigkeit 4' via einen elektrischen Kontakt mittels einer Spannungsquelle auf ein anderes Potential gelegt, so bilden die erste Elektrode 5 und die Probenflüssigkeit 4' als Gegenelektrode (= zweite Elektrode) zusammen einen Messkondensator 6, wie schematisch durch ein Kondensator-Schaltzeichen angedeutet. Der Messkondensator 6 weist je nach dem Volumen der Probenflüssigkeit 4', die sich gerade in der Röhre 1 befindet, eine unterschiedlich grosse Kapazität auf. Somit besteht ein direkter Zusammenhang zwischen der Kapazität dieses Messkondensators 6 und dem Volumen der Probenflüssigkeit 4', welche sich in der Röhre 1 befindet, d.h. beim Ansaugen (bzw. Aspirieren) von Probenflüssigkeit erhöht sich die Kapazität und beim Abgeben (bzw. Dispensieren) von Probenflüssigkeit verkleinert sich die Kapazität. Durch Bestimmung der Kapazität des Messkondensators 6 mittels einer geeigneten Messeinheit, welche z.B. einen Kapazitäts-Digital-Wandler (sog. CDC Wandler, nicht gezeigt) umfasst, kann somit direkt das Volumen der in der Röhre 1 befindlichen Probenflüssigkeit 4' ermittelt werden.

Fig. 2 zeigt ein Beispiel, bei welchem ein Arbeitsfluid 7 (auch Systemflüssigkeit genannt) zur Druckübertragung eingesetzt wird. Dabei ist die Röhre 1 teils mit dem Arbeitsfluid 7 und teils mit der Probenflüssigkeit 4' gefüllt, wobei sich zwischen den beiden Flüssigkeiten ein Luftspalt 8 einstellt, welcher verhindert, dass das Arbeitsfluid 7 mit der Probenflüssigkeit 4' in Berührung kommt. Wie in der Ausführungsform gemäss Figur 2 gezeigt, wird das (elektrisch leitfähige) Arbeitsfluid 7 über einen ersten elektrischen Kontakt 9', welcher mit dem Arbeitsfluid 7 in Fluidverbindung steht, elektrisch angeschlossen. Hierbei ist der erste elektrische Kontakt 9' gegenüber der ersten Elektrode 5 und der zweiten Elektrode 4' (Probenflüssigkeit) elektrisch isoliert. Der erste elektrische Kontakt 9' kann das Arbeitsfluid 7 auf ein Guard-Potential anlegen bzw. mit einem Guard-Potential verbinden. Ferner umfasst ist ein zweiter elektrischer Kontakt 9", welcher mit der (elektrisch leitfähigen) Probenflüssigkeit 4' in Fluidverbindung steht. Der zweite elektrische Kontakt 9" ist ebenfalls gegenüber der ersten Elektrode 5 elektrisch isoliert. Dieser zweite elektrische Kontakt 9" stellt beim Ansaugen oder Abgeben der Probenflüssigkeit 4' eine elektrische Verbindung mit der Probenflüssigkeit 4' her, sodass mindestens ein Teil der Probenflüssigkeit 4', welche sich in der Röhre 1 befindet, die zweite Elektrode des Messkondensators bildet. Die Probenflüssigkeit 4' kann über den zweiten elektrischen Kontakt 9" auf Masse angelegt bzw. mit Masse-Potential verbunden werden. In einem Ausführungsbeispiel kann die Röhre 1 wenigstens im Bereich der Öffnung 3 aus einem elektrisch leitenden Material bestehen und hierbei den zweiten elektrischen Kontakt 9" bilden, oder alternativ aus einem elektrisch nichtleitenden Material bestehen, welches als Dielektrikum des Messkondensators vorgesehen sein kann.

Wie in Fig. 2 weiter schematisch gezeigt, ist eine Messkapazität MC (measuring capacitance) über den Bereich der Röhre 1 zwischen dem ersten elektrischen Kontakt 9' und dem zweiten elektrischen Kontakt 9" bestimmbar. Ferner ist eine messbare Kapazität der Probenflüssigkeit MSC (measured sample capacitance) im Bereich der Röhre 1 zwischen dem höchsten Punkt der Probenflüssigkeit-Säule und dem zweiten elektrischen Kontakt 9" bestimmbar. Es können auch weitere Messbereiche aufgenommen werden, wie im Folgenden näher erläutert.

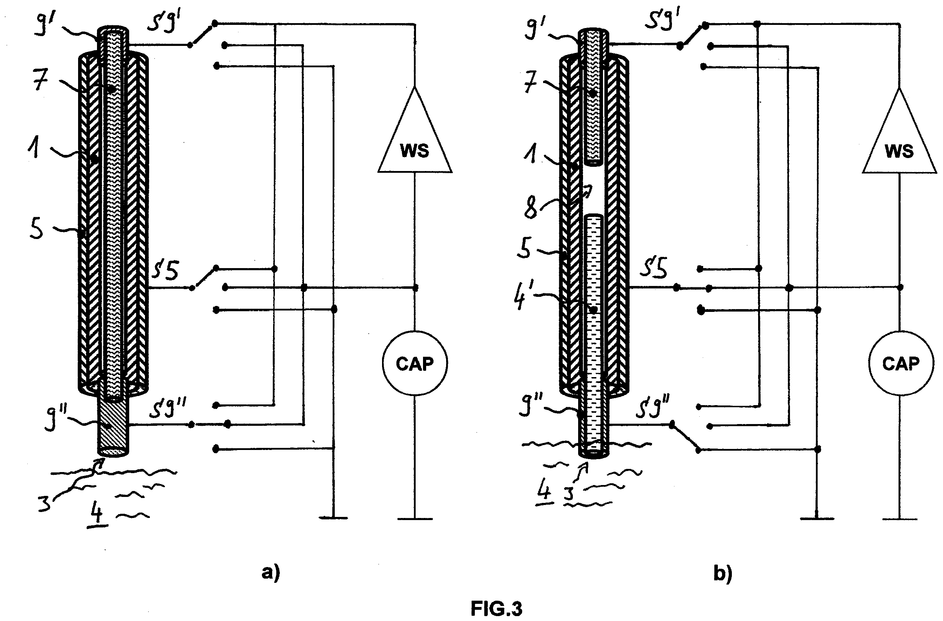

Figuren 3a) und 3b) zeigen schematisch jeweils eine elektrische Verschaltung der Pipettiervorrichtung. Hierbei ist in Fig. 3a) ein Zustand gezeigt, in welchem die Pipettiervorrichtung nicht in die in einem Probenbehältnis bevorratete Probenflüssigkeit 4 eingetaucht ist, während in Fig. 3b) ein Zustand gezeigt ist, in welchem die Röhre 1 in die Probenflüssigkeit 4 eingetaucht ist. Es ist hierbei zu erwähnen, dass über die Beschreibung hinweg die im Probenbehältnis bevorratete Probenflüssigkeit mit dem Bezugszeichen 4 gekennzeichnet ist, während der in der Pipettiervorrichtung aufgenommenen Probenflüssigkeit das Bezugszeichen 4' zugesprochen ist.

Die Röhre 1 ist durch die erste Elektrode 5 umhüllt und die zweite Elektrode ist durch die Probenflüssigkeit 4' selber gebildet (siehe Fig. 3b)).

Der erste elektrische Kontakt 9', die erste Elektrode 5 und der zweite elektrische Kontakt 9'' sind jeweils über ein erstes Umschaltelement S9', zweites Umschaltelement S5 und drittes Umschaltelement S9" verschaltet. Die Verschaltung durch die Umschaltelemente S9', S5 und S9" ist beispielhaft und dient zur Veranschaulichung - eine jegliche Umschaltung kann selbstverständlich derart implementiert sein, dass sie über einen Prozessor, Computer oder eine sonstige Steuervorrichtung gesteuert wird.

Der erste elektrische Kontakt 9' stellt einen elektrischen Kontakt mit dem Arbeitsfluid 7 her. Eine Messeinheit CAP (hierzu im Folgenden mehr) ist über den ersten elektrischen Kontakt 9' elektrisch mit dem Arbeitsfluid 7 verbindbar. Hierzu ist die Messeinheit CAP über eine niederohmige Wandlerschaltung WS elektrisch mit dem ersten elektrischen Kontakt 9' verbindbar, wobei eine Umschaltung über das erste Umschaltelement S9' realisiert werden kann. Die niederohmige Wandlerschaltung WS dient zum Reduzieren von parasitären Kapazitäten, welche u.a. durch das Arbeitsfluid 7 hervorgerufen werden können, und kann mit einem hochohmigen Eingang und einem niederohmigen Ausgang versehen sein. Das Arbeitsfluid 7 kann über das erste Umschaltelement S9' ebenso auf Masse-Potential angelegt bzw. umgeschaltet werden.

Die erste Elektrode 5 ist über das zweite Umschaltelement S5 mit der Messeinheit CAP verbindbar oder trennbar. In dem in Fig. 3a) gezeigten Zustand ist die erste Elektrode 5 von der Messeinheit CAP getrennt, während sie in dem in Fig. 3b) gezeigten Zustand mit der Messeinheit CAP verbunden ist (hierzu im Folgenden mehr). Die erste Elektrode 5 kann über das zweite Umschaltelement S5 ebenso auf Masse-Potential angelegt werden. Die Messeinheit CAP bestimmt in Abhängigkeit der Kapazität des gebildeten Messkondensators ein Volumen der angesaugten bzw. abgegebenen Probenflüssigkeit 4'. Mit anderen Worten, dient die Messeinheit CAP zur Ermittlung der Kapazität des Messkondensators und damit des Volumens der Probenflüssigkeit 4' in der Röhre 1. Die Messeinheit CAP ist beispielsweise ein Kapazitäts-Digital-Wandler ("Capacitance-to-Digital Converter", CDC), der Kapazitäten in Spannungen wandelt und auf dem Verfahren des Sigma-Delta-Wandlers basiert. Beim CDC-Verfahren wird für eine unbekannte Kapazität deren Grösse in Farad als Digitalwert bestimmt. Beispiele von im Handel erhältlichen CDC Bausteinen sind der FDC1004 von Texas Instruments sowie der AD7745 von Analog Devices. Die Messeinheit CAP kann an einem weiteren Ende mit Masse verbunden sein.

Der zweite elektrische Kontakt 9" stellt einen elektrischen Kontakt mit der Probenflüssigkeit 4' her, die wiederum über das dritte Umschaltelement S9" elektrisch mit der Messeinheit CAP koppelbar ist. Die Probenflüssigkeit 4' kann über das dritte Umschaltelement S9" ebenso elektrisch von der Messeinheit CAP getrennt und auf Masse-Potential angelegt werden.

In dem in Fig. 3a) gezeigten Zustand ist die Pipettiervorrichtung nicht in die Probenflüssigkeit 4 eingetaucht und dient hier zur Flüssigkeitspegeldetektion.

In diesem Zustand ist in einem Modus 1 der zweite elektrische Kontakt 9" über das dritte Umschaltelement S9" mit der Messeinheit CAP verbunden und gegenüber Masse isoliert. Der zweite elektrische Kontakt 9" ist in einem Zustand gegenüber Masse isoliert und mit der Messeinheit CAP verbunden, in welchem der zweite elektrische Kontakt 9" und die Probenflüssigkeit 4 voneinander beabstandet sind bzw. der zweite elektrische Kontakt 9" nicht in die Probenflüssigkeit 4 eingetaucht ist (Flüssigkeitspegeldetektion). Hierdurch wird zwischen dem zweiten Kontakt 9" an der Öffnung 3 der Röhre 1 und der Probenflüssigkeit 4 im Probenbehälter selber ein Messkondensator gebildet. In diesem Zustand kann die Probenflüssigkeit 4 über den Boden des Probenbehälters, in welchem sich die Probenflüssigkeit 4 befindet, kapazitiv mit Masse gekoppelt sein. Ein Arbeitstisch (nicht gezeigt), auf dem der Probenbehälter in z.B. einem Probenbehälterträger angeordnet ist, wird dazu mit Masse als Referenzpotential verbunden. Wie zuvor erwähnt, ist bei der Flüssigkeitspegeldetektion der zweite elektrische Kontakt 9" von Masse getrennt und mit der Messeinheit CAP verbunden, während die zweite Elektrode 5 von der Messeinheit CAP getrennt ist.

Nachdem ein Eintauchen der Röhre 1 in die Probenflüssigkeit 4 erfasst ist (siehe Fig. 3b)), schaltet die Pipettiervorrichtung auf die Bestimmung des Volumens von Probenflüssigkeit 4' in der Röhre 1 um. In einem beispielhaften Modus 2 werden die erste Elektrode 5 mit der Messeinheit CAP verbunden und der erste elektrische Kontakt 9' mit der niederohmigen Wandlerschaltung WS verbunden. Ferner trennt der dritte Umschalter S9" den zweiten elektrischen Kontakt 9" von der Messeinheit CAP und schaltet den zweiten elektrischen Kontakt 9" auf Masse um bzw. legt ihn auf Masse-Potential an. Indem der zweite elektrische Kontakt 9" nun auf Masse angelegt ist, können Einflüsse einer Probenbehälterkapazität eliminiert werden. Ferner, indem der erste elektrische Kontakt 9' mit der niederohmigen Wandlerschaltung WS verbunden ist, werden mögliche Einflüsse durch das Arbeitsfluid 7 eliminiert.

Zusammengefasst, wird also der zweite elektrische Kontakt 9" in einem Zustand mit Masse verbunden und von der Messeinheit CAP getrennt, in welchem der zweite elektrische Kontakt 9" und die Probenflüssigkeit 4 miteinander in Verbindung stehen bzw. der zweite elektrische Kontakt 9" in die Probenflüssigkeit 4 im Probenbehälter eingetaucht ist. In diesem Zustand wird der Messkondensator zwischen der Probenflüssigkeit 4' in der Röhre 1 und der ersten Elektrode 5 gebildet und die Pipettiervorrichtung hierdurch in die Lage versetzt, das Volumen von Probenflüssigkeit 4' in der Röhre 1 im Wesentlichen durchgängig und frei von Messeinflüssen zu bestimmen.

Mit anderen Worten, können parasitäre Effekte eliminiert werden, indem die erste Elektrode 5 erst beim Bestimmen des Volumens von Probenflüssigkeit 4' durch die Messeinheit CAP hiermit verbunden wird und (im Wesentlichen) gleichzeitig der zweite elektrische Kontakt 9" von der Messeinheit CAP getrennt und auf Masse angelegt wird. Hierbei spielt es keine Rolle, ob die Röhre 1 in die im Probenbehälter bevorratete Probenflüssigkeit 4 eingetaucht ist oder nicht. Ein wesentlicher Vorteil besteht somit darin, dass Messungen beim Pipettieren nicht nur beim Aspirieren, sondern auch beim kontaktfreien Dispensieren der Probenflüssigkeit 4' vorgenommen werden können. Beispielsweise können Teilprobenvolumina bei Mehrfach-Abgaben (multi dispense) zuverlässig bestimmt werden.

In einer ersten Variante von einem Modus 3 wird der erste elektrische Kontakt 9' durch das erste Umschaltelement S9' mit der niederohmigen Wandlerschaltung WS verbunden, wird die erste Elektrode 5 durch das zweite Umschaltelement S5 auf Masse angelegt, und wird der zweite elektrische Kontakt 9" durch das dritte Umschaltelement S9" mit der Messeinheit CAP verbunden. Hierdurch kann ein möglicher Einfluss der Probenbehälterkapazität durch Subtraktion von Modus 1 eliminiert werden. Ferner, indem der erste elektrische Kontakt 9' mit der niederohmigen Wandlerschaltung WS verbunden wird, werden mögliche Einflüsse durch das Arbeitsfluid 7 eliminiert. Da hier die erste Elektrode 5 auf Masse angelegt ist, können weiter vorteilhaft mögliche Einflüsse durch Laborgeräte eliminiert werden. Ein Vorteil der zusätzlichen Modi besteht darin, dass eine parallel gemessene Probenbehälterkapazität durch eine alternierend gemessene Grundkapazität ohne Probenflüssigkeit (Modus 1) subtrahiert werden kann.

In einer zweiten Variante von Modus 3 kann der dritte elektrische Kontakt 9" mit der Messeinheit CAP verbunden werden, während die erste Elektrode 5 und der erste elektrische Kontakt 9' an Masse angelegt werden können (nicht gezeigt). Somit wäre kein aktiver Guard notwendig. Diese Konfiguration kann vorteilhaft sein, wenn am anderen Ende der Röhre 1 eine Masseverbindung vorhanden ist und die Probenflüssigkeit 4 eine hohe Leitfähigkeit hat. Durch ein vorteilhaft schnelles Umschalten zwischen der ersten und zweiten Variante können mögliche Störeinflüsse reduziert bzw. rausgerechnet werden. Weitere Details hierzu sind im Folgenden angegeben.

Es gibt Anwendungsfälle, bei denen auch grössere Probenflüssigkeit 4' Volumen aufgenommen werden, die das maximale Aufnahmevolumen der Röhre 1 überschreiten können. Hierbei kontaktiert die Probenflüssigkeit 4' neben dem zweiten elektrischen Kontakt 9" ebenso den ersten elektrischen Kontakt 9' und ist der Luftspalt 8 über den ersten elektrischen Kontakt 9' nach oben hinweg hinausgewandert. In diesem Fall kann auf einen beispielhaften Modus 4 umgeschaltet werden. In diesem Modus 4 wird der erste elektrische Kontakt 9' durch das erste Umschaltelement S9' mit der Messeinheit CAP verbunden, wird die erste Elektrode 5 durch das zweite Umschaltelement S5 auf Masse angelegt, und wird der zweite elektrische Kontakt 9" durch das dritte Umschaltelement S9" ebenfalls mit der Messeinheit CAP verbunden. Ein Ausleger (Z-Stange) der Pipettiervorrichtung, welcher auf Masse liegt, kann als äussere Elektrode dienen. Ein möglicher Einfluss der Probenbehälterkapazität kann durch Subtraktion von Modus 1 eliminiert werden. Ferner kann ein möglicher Einfluss des Arbeitsfluides 7, welches in diesem Beispiel weder den zweiten elektrischen Kontakt 9" noch den ersten elektrischen Kontakt 9' kontaktiert, eliminiert werden. Indem ferner die erste Elektrode 5 auf Masse angelegt wird, werden Einflüsse durch Laborgeräte ebenfalls eliminiert.

Die beschriebenen unterschiedlichen Modi sind in der folgenden Tabelle 1 wiedergegeben. Die Angaben beziehen sich darauf, womit der erste elektrische Kontakt 9', die erste Elektrode 5 und der zweite elektrische Kontakt 9" durch Umschalten eines jeweiligen der Umschaltelemente S9', S5 und S9" jeweils gekoppelt werden, nämlich ob mit der niederohmigen Wandlerschaltung WS, der Messeinheit CAP oder Masse GND. So bezeichnet z.B. der Modus 1, wie in der Tabelle angegeben und zuvor beschrieben, dass 9' (erster elektrischer Kontakt) durch S9' (erstes Umschaltelement) mit WS (niederohmige Wandlerschaltung) verbunden ist (Umschalter S9' oben), 5 durch S5 mit WS verbunden ist (Umschalter S5 oben), und 9" durch S9" mit CAP (Messeinheit) verbunden ist (Umschalter S9" mittig).

**Tabelle 1**

| Modus | S9' | S5 | S9" | Anwendung/Zweck |
|---|---|---|---|---|
| 1 | WS | WS | CAP | - Eintauchdetektion (vor dem Eintauchen) → keine Einflüsse durch Arbeitsfluid (betrifft S9") oder durch ein Laborgerät (betrifft S5) |
| | | | | - Probenbehälterkapazität (nach dem Eintauchen) → keine Einflüsse durch Arbeitsfluid (betrifft S9") oder Probenflüssigkeit (betrifft S5) |
| 2 | WS | CAP | GND | - Volumenmessung der Probenflüssigkeit MSC A → Einfluss der Probenbehälterkapazität (S9" ist auf Masse) und Einfluss des Arbeitsfluids (S9' mit WS gekoppelt) können eliminiert werden |
| 3 | WS | GND | CAP | - Volumenmessung der Probenflüssigkeit MSC B → Einfluss der Probenbehälterkapazität kann durch Subtraktion von Modus 1 eliminiert werden; Kein Einfluss der Systemflüssigkeit (S9' mit WS gekoppelt); |
| | | | | - Mögliche Messverfälschungen durch Laborgerät können eliminiert werden (erste Elektrode 5 ist auf Masse) |
| 4 | CAP | GND | CAP | - Volumenmessung der Probenflüssigkeit mit vergrössertem Messkondensator (Z-Stange ist auf Masse) → Probenflüssigkeit kontaktiert 9" und 9'; Luftspalt ist oberhalb 9'; |
| | | | | - Einfluss der Probenbehälterkapazität kann durch Subtraktion von Modus 1 eliminiert werden; |
| | | | | - Einfluss des Arbeitsfluides kann eliminiert werden (nicht mehr kontaktiert); Mögliche Messverfälschungen durch Laborgerät werden eliminiert (erste Elektrode 5 ist auf Masse) |

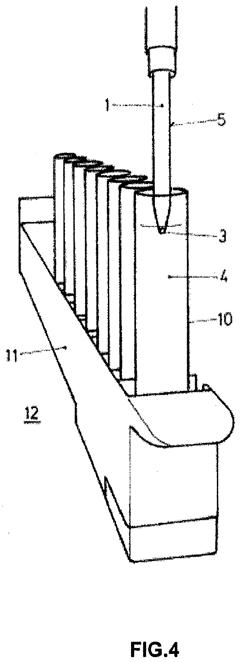

Fig. 4 zeigt ein Beispiel eines Flüssigkeitsbearbeitungssystems mit einer Pipettiervorrichtung, bei welcher die Röhre 1 durch eine Kupferfolie als erste Elektrode 5 umhüllt sein kann. Die Probenflüssigkeit 4 befindet sich in einer Probenröhre 10 als Probenbehälter, welche zusammen mit weiteren Probenröhren in einem Probenbehälterträger 11 angeordnet ist, der auf einem Arbeitstisch 12 steht. Die leitende Arbeitstischoberfläche ist mit Masse verbunden, wobei die Probenflüssigkeit 4, welche kapazitiv mit dem Arbeitstisch 12 gekoppelt ist, ebenfalls auf Masse liegt.

### LISTE DER BEZUGSZEICHEN

- 1: Röhre
- 2: Pipettenspitze
- 3: Öffnung in der Pipettenspitze, Pipettieröffnung
- 4: Probenflüssigkeit im Probenbehälter
- 4': Probenflüssigkeit in der Röhre = zweite, variable Elektrode ("Flüssigelektrode") des Messkondensators
- 5: erste, fixe Elektrode des Messkondensators
- 6: darstellhafter Messkondensator
- 7: Arbeitsfluid bzw. Systemflüssigkeit
- 8: Luftspalt
- 9': erster elektrischer Kontakt für das Arbeitsfluid
- 9": zweiter elektrischer Kontakt für die Probenflüssigkeit
- 10: Probenbehälter, z.B. Probenröhre
- 11: Probenbehälterträger
- 12: Arbeitstisch
- CAP: Messeinheit
- MC: Messkapazität
- MSC: messbare Kapazität der Probenflüssigkeit
- S9': erstes Umschaltelement
- S5: zweites Umschaltelement
- S9": drittes Umschaltelement
- WS: niederohmige Wandlerschaltung

## Patentansprüche

1. Pipettiervorrichtung mit einer Röhre (1), wobei ein Fluidraum der Röhre (1) zumindest teilweise mit einem Arbeitsfluid (7) gefüllt ist, das an einem ersten Ende der Röhre (1) mit einem Druckerzeugungsmittel wirkverbindbar ist, wobei die Röhre (1) zum Ansaugen bzw. Abgeben einer Probenflüssigkeit (4') über eine an einem zweiten Ende der Röhre (1) vorgesehene Öffnung (3) ausgebildet ist, wobei das Arbeitsfluid (7) und die Probenflüssigkeit (4') voneinander über einen Luftspalt (8) elektrisch isoliert sind, **dadurch gekennzeichnet, dass** an der Pipettiervorrichtung eine erste Elektrode (5) ausgebildet ist, welche zusammen mit einer zweiten Elektrode (4'), die durch mindestens einen Teil der in der Röhre aufnehmbaren Probenflüssigkeit (4') gebildet ist, einen Messkondensator (6) bildet, welcher mit einer Messeinheit (CAP) wirkverbindbar ist, welche ausgebildet ist, in Abhängigkeit der Kapazität des Messkondensators (6) ein Volumen der angesaugten bzw. abgegebenen Probenflüssigkeit (4') zu bestimmen, ferner **dadurch gekennzeichnet, dass** die Pipettiervorrichung einen ersten elektrischen Kontakt (9') umfasst, welcher von der ersten Elektrode (5) und zweiten Elektrode (4') elektrisch isoliert ist und dazu ausgebildet ist, eine elektrische Verbindung mit dem Arbeitsfluid (7) herzustellen, wobei der erste elektrische Kontakt (9') über eine niederohmige Wandlerschaltung (WS) elektrisch mit der Messeinheit (CAP) verbindbar ist.

2. Pipettiervorrichtung nach Anspruch 1, wobei die niederohmige Wandlerschaltung (WS) ausgebildet ist zum Reduzieren von parasitären Kapazitäten, welche durch das Arbeitsfluid (4') hervorrufbar sind.

3. Pipettiervorrichtung nach Anspruch 1 oder 2, wobei die niederohmige Wandlerschaltung (WS) mit einem hochohmigen Eingang und einem niederohmigen Ausgang versehen ist.

4. Pipettiervorrichtung nach einem der vorhergehenden Ansprüche, ferner umfassend einen zweiten elektrischen Kontakt (9''), welcher von der ersten Elektrode (5) elektrisch isoliert ist und dazu ausgebildet ist, beim Ansaugen oder Abgeben der Probenflüssigkeit (4') eine elektrische Verbindung mit der Probenflüssigkeit (4') herzustellen, sodass mindestens ein Teil der Probenflüssigkeit (4'), welche sich in der Röhre (1) befindet, die zweite Elektrode (4') des Messkondensators (6) bildet, wobei die erste Elektrode (5) mit der Messeinheit (CAP) elektrisch verbindbar ist.

5. Pipettiervorrichtung nach einem der vorhergehenden Ansprüche, wobei die erste Elektrode (5) die Röhre (1) teilweise oder vollständig umhüllt.

6. Pipettiervorrichtung nach Anspruch 4 oder 5, wobei die Röhre (1) wenigstens im Bereich der Öffnung (3) aus einem elektrisch leitenden Material besteht und den zweiten elektrischen Kontakt (9") bildet, oder alternativ aus einem elektrisch nichtleitenden Material besteht, welches als Dielektrikum des Messkondensators vorgesehen ist.

7. Pipettiervorrichtung nach einem der Ansprüche 4 bis 6, wobei der zweite elektrische Kontakt (9") über eine kapazitive Koppelung via die Probenflüssigkeit (4) erstellbar ist, welche sich in einem Probenbehälter (10) befindet, aus dem Probenflüssigkeit ansaugbar bzw. in den Probenflüssigkeit abgebbar ist.

8. Pipettiervorrichtung nach einem der Ansprüche 4 bis 7, wobei der zweite elektrische Kontakt (9") über ein drittes Umschaltelement (S9") mit der Messeinheit (CAP), der niederohmigen Wandlerschaltung (WS) oder Masse verbindbar ist.

9. Pipettiervorrichtung nach Anspruch 8, wobei ferner der erste elektrische Kontakt (9') und die erste Elektrode (5) über jeweils ein erstes Umschaltelement (S9') und zweites Umschaltelement (S5) mit der Messeinheit (CAP), der niederohmigen Wandlerschaltung (WS) oder Masse verbindbar sind, wobei durch ein Umschalten der jeweiligen Kopplungen zwischen dem ersten elektrischen Kontakt (9'), der ersten Elektrode (5) und dem zweiten elektrischen Kontakt (9") mit jeweils der Messeinheit (CAP), der niederohmigen Wandlerschaltung (WS) oder Masse physikalische Effekte, welche sich negativ auf die Messergebnisse auswirken können, im Wesentlichen eliminiert werden.

10. Pipettiervorrichtung nach Anspruch 8 oder 9, wobei der zweite elektrische Kontakt (9") in einem Zustand gegenüber Masse isoliert und mit der Messeinheit (CAP) verbunden ist, in welchem der zweite elektrische Kontakt (9'') und die Probenflüssigkeit (4) voneinander beabstandet sind bzw. der zweite elektrische Kontakt (9") nicht in die Probenflüssigkeit (4) eingetaucht ist.

11. Pipettiervorrichtung nach Anspruch 8 oder 9, wobei der zweite elektrische Kontakt (9") in einem Zustand mit Masse verbunden und von der Messeinheit (CAP) getrennt ist, in welchem der zweite elektrische Kontakt (9") und die Probenflüssigkeit (4) miteinander in Verbindung stehen bzw. der zweite elektrische Kontakt (9") in die Probenflüssigkeit (4) eingetaucht ist.

12. Flüssigkeitsbearbeitungssystem umfassend eine Pipettiervorrichtung nach einem der Ansprüche 1 bis 11, eine Messeinheit (CAP), welche ausgebildet ist, in Abhängigkeit der Kapazität des Messkondensators ein Volumen der angesaugten bzw. abgegebenen Probenflüssigkeit (4') zu bestimmen, und eine niederohmige Wandlerschaltung (WS), wobei der erste elektrische Kontakt (9'), welcher dazu ausgebildet ist, eine elektrische Verbindung mit dem Arbeitsfluid (7) herzustellen, und die Messeinheit (CAP) über die niederohmige Wandlerschaltung (WS) elektrisch miteinander verbunden sind.

13. Flüssigkeitsbearbeitungssystem nach Anspruch 12, ferner umfassend ein Druckerzeugungsmittel, wobei das Druckerzeugungsmittel mit einem Regler verbunden ist, welcher ausgebildet ist, um in einem geschlossenen Regelkreis basierend auf dem von der Messeinheit (CAP) bestimmten Volumen der angesaugten bzw. abgegebenen Probenflüssigkeit (4') sowie eines vorgegebenen Zielvolumens der angesaugten bzw. abgegebenen Probenflüssigkeit (4'), einen Druck für das Ansaugen bzw. Abgegeben der Probenflüssigkeit (4') an das Arbeitsfluid (7) anzulegen.

14. Flüssigkeitsbearbeitungssystem nach Anspruch 12 oder 13, weiter umfassend eine motorisierte Transporteinheit, wie beispielsweise einen Roboterarm, auf welcher die Pipettiervorrichtung angeordnet ist, wobei der Regler zusätzlich dazu ausgebildet ist, Signale an die Transporteinheit zu senden, um die Pipettiervorrichtung so zu bewegen, dass die Öffnung (3) der Röhre (1) genau positionierbar ist, insbesondere in einem mit der Probenflüssigkeit (4) gefüllten Probenbehälter (10), wie beispielsweise einem Probenröhrchen oder einer Mikroplatte.

15. Flüssigkeitsbearbeitungssystem nach einem der Ansprüche 12 bis 14, ferner umfassend ein drittes Umschaltelement (S9"), welches den zweiten elektrischen Kontakt (9") elektrisch mit der Messeinheit (CAP) verbindet oder hiervon trennt.

16. Flüssigkeitsbearbeitungssystem nach einem der Ansprüche 12 bis 15, ferner umfassend ein drittes Umschaltelement (S9"), welches den zweiten elektrischen Kontakt (9") elektrisch mit Masse verbindet oder hiergegen isoliert.

17. Flüssigkeitsbearbeitungssystem nach Anspruch 16, wobei das dritte Umschaltelement (S9") den zweiten elektrischen Kontakt (9") in einem Zustand gegenüber Masse isoliert, in welchem der zweite elektrische Kontakt (9") und die Probenflüssigkeit (4) voneinander beabstandet sind bzw. der zweite elektrische Kontakt (9'') nicht in die Probenflüssigkeit (4) eingetaucht ist.

18. Flüssigkeitsbearbeitungssystem nach Anspruch 16 oder 17, wobei das dritte Umschaltelement (S9") den zweiten elektrischen Kontakt (9") in einem Zustand mit Masse verbindet, in welchem der zweite elektrische Kontakt (9") und die Probenflüssigkeit (4) miteinander in Verbindung stehen bzw. der zweite elektrische Kontakt (9'') in die Probenflüssigkeit (4) eingetaucht ist.

19. Verfahren zum Betreiben eines Flüssigkeitsbearbeitungssystems nach einem der Ansprüche 12 bis 18 in einem offenen Regelkreis, umfassend die Schritte:
- Erfassen eines Zustandes, in welchem der zweite elektrische Kontakt (9") der Pipettiervorrichtung mit der Probenflüssigkeit in Kontakt (4) tritt;
- Umschalten des Flüssigkeitsbearbeitungssystems auf Volumenmessung;
- Aspirieren der Probenflüssigkeit (4) durch das Druckerzeugungsmittel; und
- Bestimmen eines Volumens der aspirierten Probenflüssigkeit (4') in Abhängigkeit der Kapazität des Messkondensators.

20. Verfahren zum Betreiben eines Flüssigkeitsbearbeitungssystems nach einem der Ansprüche 12 bis 18 in einem geschlossenen Regelkreis, umfassend die Schritte:
- Erfassen eines Zustandes, in welchem der zweite elektrische Kontakt (9") der Pipettiervorrichtung mit der Probenflüssigkeit in Kontakt (4) tritt;
- Umschalten des Flüssigkeitsbearbeitungssystems auf Volumenmessung; und
- Aspirieren der Probenflüssigkeit (4) durch das Druckerzeugungsmittel basierend auf ein vorbestimmtes Volumensignal.

## Claims

1. Pipetting device having a tube (1), wherein a liquid space of the tube (1) is at least partially filled with a working fluid (7) which can be operatively connected at a first end of the tube (1) to a pressure-generating means, wherein the tube (1) is adapted to aspirate or dispense a sample liquid (4') via an opening (3) provided at a second end of the tube (1), wherein the working fluid (7) and the sample liquid (4') are electrically insulated from one another via an air gap (8), **characterized in that** a first electrode (5) is formed on the pipetting device, which, together with a second electrode (4') formed by at least a part of the sample liquid (4') that can be accommodated in the tube, forms a measuring capacitor (6) which can be operatively connected to a measuring unit (CAP) which is designed, as a function of the capacitance of the measuring capacitor (6), to determine a volume of the aspirated or dispensed sample liquid (4'), further **characterized in that** the pipetting device comprises a first electrical contact (9') which is electrically insulated from the first electrode (5) and the second electrode (4') and adapted to establish an electrical connection with the working fluid (7), wherein the first electrical contact (9') is electrically connectable to the measuring unit (CAP) via a low-impedance converter circuit (WS).

2. Pipetting device according to claim 1, wherein the low-impedance converter circuit (WS) is designed to reduce parasitic capacitances which can be caused by the working fluid (4').

3. Pipetting device according to claim 1 or 2, wherein the low-impedance converter circuit (WS) is provided with a high-impedance input and a low-impedance output.

4. Pipetting device according to one of the preceding claims, further comprising a second electrical contact (9'') electrically insulated from the first electrode (5) and adapted to establish an electrical connection with the sample liquid (4') upon aspiration or dispensing of the sample liquid (4') such that at least a part of the sample liquid (4') contained in the tube (1) forms the second electrode (4') of the measuring capacitor (6), wherein the first electrode (5) is electrically connectable to the measuring unit (CAP).

5. Pipetting device according to one of the preceding claims, wherein the first electrode (5) partially or completely covers the tube (1).

6. Pipetting device according to claim 4 or 5, wherein the tube (1), at least in the region of the opening (3), comprises an electrically conductive material and forms the second electrical contact (9''), or alternatively comprises an electrically non-conductive material which is provided as dielectric of the measuring capacitor.

7. Pipetting device according to one of claims 4 to 6, wherein the second electrical contact (9'') can be established via a capacitive coupling via the sample liquid (4) which is loaded in a sample container (10) from which sample liquid can be aspirated or into which sample liquid can be dispensed.

8. Pipetting device according to one of claims 4 to 7, wherein the second electrical contact (9") is connectable via a third switching element (S9") to the measuring unit (CAP), the low-impedance converter circuit (WS) or ground.

9. Pipetting device according to claim 8, wherein further the first electrical contact (9') and the first electrode (5) are each connectable via a first switching element (S9') and a second switching element (S5) to the measuring unit (CAP), the low-impedance converter circuit (WS) or ground, wherein physical effects which can have a negative impact on the measurement results are substantially eliminated by switching the respective couplings between the first electrical contact (9'), the first electrode (5) and the second electrical contact (9") to the measuring unit (CAP), the low-impedance converter circuit (WS) or ground, respectively.

10. Pipetting device according to claim 8 or 9, wherein the second electrical contact (9") is insulated from ground and connected to the measuring unit (CAP) in a state, in which the second electrical contact (9") and the sample liquid (4) are spaced apart from each other or rather the second electrical contact (9") is not immersed in the sample liquid (4).

11. Pipetting device according to claim 8 or 9, wherein the second electrical contact (9") is connected to ground and separated from the measuring unit (CAP) in a state, in which the second electrical contact (9") and the sample liquid (4) are in communication with each other or rather the second electrical contact (9") is immersed in the sample liquid (4).

12. Liquid processing system, comprising a pipetting device according to one of claims 1 to 11, a measuring unit (CAP) adapted to determine a volume of the aspirated or dispensed sample liquid (4') depending on the capacitance of the measuring capacitor, and a low-impedance converter circuit (WS), wherein the first electrical contact (9'), which is adapted to establish an electrical connection to the working fluid (7), and the measuring unit (CAP) are electrically connected to each other via the low-impedance converter circuit (WS).

13. Liquid processing system according to claim 12, further comprising a pressure-generating means, wherein the pressure-generating means is connected to a controller adapted to, in a closed control loop, based on the volume of aspirated or dispensed sample liquid (4') determined by the measuring unit (CAP), and a predetermined target volume of the aspirated or dispensed sample liquid (4'), apply a pressure to the working fluid (7) for aspirating or dispensing sample liquid (4').

14. Liquid processing system according to claim 12 or 13, further comprising a motorized transport unit, such as a robot arm, on which the pipetting device is arranged, wherein the controller is additionally adapted to send signals to the transport unit in order to move the pipetting device such that the opening (3) of the tube (1) is precisely positionable, in particular in a sample container (10) filled with the sample liquid (4), such as a sample tube or a microplate.

15. Liquid processing system according to one of claims 12 to 14, further comprising a third switching element (S9") which electrically connects or disconnects the second electrical contact (9") to or rather from the measuring unit (CAP).

16. Liquid processing system according to one of claims 12 to 15, further comprising a third switching element (S9") which electrically connects or insulates the second electrical contact (9") to or rather from ground.

17. Liquid processing system according to claim 16, wherein the third switching element (S9") insulates the second electrical contact (9"**)** from ground in a state, in which the second electrical contact (9") and the sample liquid (4) are spaced apart from each other or rather the second electrical contact (9") is not immersed in the sample liquid (4).

18. Liquid processing system according to claim 16 or 17, wherein the third switching element (S9") connects the second electrical contact (9") to ground in a state, in which the second electrical contact (9") and the sample liquid (4) are in communication with each other or rather the second electrical contact (9") is immersed in the sample liquid (4).

19. Method for operating a liquid processing system according to one of claims 12 to 18 in an open control loop, comprising the steps of:
- detecting a state, in which the second electrical contact (9") of the pipetting device contacts the sample liquid (4);
- switching the liquid processing system to volume measurement;
- aspirating the sample liquid (4) by means of the pressure-generating medium; and
- determining a volume of the aspirated sample liquid (4') as a function of the capacitance of the measuring capacitor.

20. Method for operating a liquid processing system according to one of claims 12 to 18 in a closed control loop, comprising the steps of:
- detecting a state, in which the second electrical contact (9") of the pipetting device contacts the sample liquid (4);
- switching of the liquid processing system to volume measurement; and
- aspirating the sample liquid (4) by means of the pressure-generating medium based on a predetermined volume signal.

## Revendications

1. Dispositif de pipettage avec un tube (1), dans lequel un espace fluidique du tube (1) est rempli au moins partiellement avec un fluide de travail (7) qui peut être mis en liaison active avec un dispositif générateur de pression au niveau d'une première extrémité du tube (1), le tube (1) étant conçu pour aspirer ou distribuer un liquide d'échantillon (4') via une ouverture (3) prévue au niveau d'une deuxième extrémité du tube (1), dans lequel le fluide de travail (7) et le liquide d'échantillon (4') sont isolés électriquement l'un par rapport à l'autre par le biais d'un entrefer (8), **caractérisé en ce qu'**il est formé sur le dispositif de pipettage une première électrode (5) qui, avec une deuxième électrode (4') qui est formée par au moins une partie du liquide d'échantillon (4') pouvant être reçu dans le tube, forme un condensateur de mesure (6) qui peut être mis en liaison active avec une unité de mesure (CAP), laquelle unité de mesure est conçue pour déterminer, en fonction de la capacité du condensateur de mesure (6), un volume du liquide d'échantillon (4') aspiré ou distribué, **caractérisé en outre en ce que** le dispositif de pipettage comprend un premier contact électrique (9') qui est isolé électriquement de la première électrode (5) et de la deuxième électrode (4') et qui est conçu pour établir une connexion électrique avec le fluide de travail (7), le premier contact électrique (9') pouvant être raccordé électriquement à l'unité de mesure (CAP) par le biais d'un circuit convertisseur de basse impédance (WS).

2. Dispositif de pipettage selon la revendication 1, dans lequel le circuit convertisseur de basse impédance (WS) est conçu pour réduire les capacités parasites qui peuvent être provoquées par le fluide de travail (4').

3. Dispositif de pipettage selon la revendication 1 ou 2, dans lequel le circuit convertisseur de basse impédance (WS) est équipé d'une entrée à haute impédance et d'une sortie à basse impédance.

4. Dispositif de pipettage selon l'une des revendications précédentes, comprenant en outre un deuxième contact électrique (9") qui est isolé électriquement de la première électrode (5) et qui est conçu, lors de l'aspiration ou de la distribution du liquide d'échantillon (4'), pour établir une connexion électrique avec le liquide d'échantillon (4'), de sorte qu'au moins une partie du liquide d'échantillon (4') qui se trouve dans le tube (1), forme la deuxième électrode (4') du condensateur de mesure (6), la première électrode (5) pouvant être raccordée électriquement à l'unité de mesure (CAP).

5. Dispositif de pipettage selon l'une des revendications précédentes, dans lequel la première électrode (5) entoure partiellement ou complètement le tube (1).

6. Dispositif de pipettage selon la revendication 4 ou 5, dans lequel le tube (1) est constitué au moins dans la zone de l'ouverture (3) d'un matériau électriquement conducteur et forme le deuxième contact électrique (9"), ou en variante est constitué d'un matériau électriquement non conducteur qui est prévu comme diélectrique du condensateur de mesure.

7. Dispositif de pipettage selon l'une des revendications 4 à 6, dans lequel le deuxième contact électrique (9") peut être établi par le biais d'un couplage capacitif via le liquide d'échantillon (4) qui se trouve dans un récipient d'échantillon (10), qui peut être aspiré du liquide d'échantillon ou être distribué dans le liquide d'échantillon.

8. Dispositif de pipettage selon l'une des revendications 4 à 7, dans lequel le deuxième contact électrique (9") peut être raccordé, par le biais d'un troisième élément de commutation (S9"), à l'unité de mesure (CAP), au circuit convertisseur à basse impédance (WS) ou à la masse.

9. Dispositif de pipettage selon la revendication 8, dans lequel en outre le premier contact électrique (9') et la première électrode (5) peuvent être raccordés, chacun par le biais d'un premier élément de commutation (S9') et d'un deuxième élément de commutation (S5), à l'unité de mesure (CAP), au circuit convertisseur à basse impédance (WS) ou à la masse, dans lequel, en commutant les différents couplages entre le premier contact électrique (9'), la première électrode (5) et le deuxième contact électrique (9") avec l'unité de mesure (CAP), le circuit convertisseur à basse impédance (WS) ou la masse, on supprime sensiblement les effets physiques qui peuvent agir négativement sur les résultats de mesure.

10. Dispositif de pipettage selon la revendication 8 ou 9, dans lequel le deuxième contact électrique (9"), dans un état, est isolé de la masse et est raccordé à l'unité de mesure (CAP), et dans lequel le deuxième contact électrique (9") et le liquide d'échantillon (4) sont espacés l'un de l'autre ou dans lequel le deuxième contact électrique (9") n'est pas immergé dans le liquide d'échantillon (4).

11. Dispositif de pipettage selon la revendication 8 ou 9, dans lequel le deuxième contact électrique (9"), dans un état, est raccordé à la masse et est séparé de l'unité de mesure (CAP), dans lequel le deuxième contact électrique (9") et le liquide d'échantillon (4) sont en communication l'un avec l'autre ou le deuxième contact électrique (9") est immergé dans le liquide d'échantillon (4).

12. Système de traitement de liquide comprenant un dispositif de pipettage selon l'une des revendications 1 à 11, une unité de mesure (CAP) qui est conçue pour déterminer, en fonction de la capacité du condensateur de mesure, un volume du liquide d'échantillon (4') aspiré ou distribué, et un circuit convertisseur à basse impédance (WS), dans lequel le premier contact électrique (9') qui est conçu pour établir une connexion électrique avec le fluide de travail (7) et l'unité de mesure (CAP) sont raccordés électriquement entre eux par le biais d'un circuit convertisseur à basse impédance (WS).

13. Système de traitement de liquide selon la revendication 12, comprenant en outre un dispositif générateur de pression, le dispositif générateur de pression étant raccordé à un régulateur qui est conçu pour, dans un circuit de régulation fermé, sur la base du volume du liquide d'échantillon aspiré ou distribué (4') déterminé par l'unité de mesure (CAP) ainsi que sur la base d'un volume cible prédéfini du liquide d'échantillon aspiré ou distribué (4'), appliquer au niveau du fluide de travail (7) une pression pour l'aspiration ou la distribution du liquide d'échantillon (4').

14. Système de traitement de liquide selon la revendication 12 ou 13, comprenant en outre une unité de transport motorisée, comme par exemple un bras de robot sur lequel est agencé le dispositif de pipettage, dans lequel le régulateur est conçu en outre pour envoyer des signaux à l'unité de transport pour déplacer le dispositif de pipettage de sorte que l'ouverture (3) du tube (1) puisse être positionnée de façon précise, en particulier dans un récipient d'échantillon (10) rempli du liquide d'échantillon (4), comme par exemple un tube à essai ou une microplaque.

15. Système de traitement de liquide selon l'une des revendications 12 à 14, comprenant en outre un troisième élément de commutation (S9") qui raccorde électriquement le deuxième contact électrique (9") à l'unité de mesure (CAP) ou l'en sépare.

16. Système de traitement de liquide selon l'une des revendications 12 à 15, comprenant en outre un troisième élément de commutation (S9") qui raccorde électriquement le deuxième contact électrique (9") à la masse ou l'en isole.

17. Système de traitement de liquide selon la revendication 16, dans lequel le troisième élément de commutation (S9"), dans un état dans lequel le deuxième contact électrique (9") et le liquide d'échantillon (4) sont à distance l'un de l'autre ou dans lequel le deuxième contact électrique (9") n'est pas immergé dans le liquide d'échantillon (4), isole le deuxième contact électrique (9") de la masse.

18. Système de traitement de liquide selon la revendication 16 ou 17, dans lequel le troisième élément de commutation (S9"), dans un état dans lequel le deuxième contact électrique (9") et le liquide d'échantillon (4) sont en communication l'un avec l'autre ou dans lequel le deuxième contact électrique (9") est immergé dans le liquide d'échantillon (4), raccorde électriquement le deuxième contact électrique (S9") à la masse.

19. Procédé pour faire fonctionner un système de traitement de liquide selon l'une des revendications 12 à 18 dans un circuit de régulation ouvert, comprenant les étapes consistant à :
- détecter un état dans lequel le deuxième contact électrique (9") du dispositif de pipettage entre en contact avec le liquide d'échantillon (4) ;
- commuter le système de traitement de liquide en mesure de volume ;
- aspirer le liquide d'échantillon (4) par le dispositif générateur de pression ; et
- déterminer un volume du liquide d'échantillon aspiré (4') en fonction de la capacité du condensateur de mesure.

20. Procédé pour faire fonctionner un système de traitement de liquide selon l'une des revendications 12 à 18 dans un circuit de régulation fermé, comprenant les étapes consistant à :
- détecter un état dans lequel le deuxième contact électrique (9") du dispositif de pipettage entre en contact avec le liquide d'échantillon (4) ;
- commuter le système de traitement de liquide en mesure de volume ; et
- aspirer le liquide d'échantillon (4) par le dispositif générateur de pression sur la base d'un signal de volume prédéterminé.
